# EUROPÄISCHE PATENTANMELDUNG

(11) **EP 2 093 503 A1**
(43) Veröffentlichungstag der Anmeldung: **26.08.2009**
(21) Anmeldenummer: 08101749.3
(22) Anmeldetag: 19.02.2008
(51) Int. Cl.: F24D 12/02, F24H 8/00

(54) **Kombination Heizkessel mit Abgasrekuperator**

(71) Anmelder: Ygnis AG, 6017 Ruswil (CH)
(72) Erfinder: Dr. de Neef, Albert Tjeerd, 6212, Kaltbach (CH)
(74) Vertreter: Troesch Scheidegger Werner AG

(57) **Zusammenfassung**

Die Flüssigkeitsführung in einem Abgaswärmetauscher (5) ist derart mit der Heizflüssigkeit in einem Heizkessel (1) kreislaufartig verbunden, dass bei Erwärmung der Wärmetauscherflüssigkeit mit der Heizflüssigkeit im Kessel eine natürliche Flüssigkeitszirkulation entstehen kann.

## Beschreibung

Die vorliegende Erfindung betrifft einen Wärmetauscher im Bereich der Abgasführung eines Heizkessels gemäss dem Oberbegriff nach Anspruch 1, einen Heizkessel mit einem Wärmetauscher im Bereich der Abgasführung sowie ein Verfahren zum Betreiben eines Heizkessels.

Traditionelle Flammrohrheizkessel aus Schwarzstahl weisen hohe Abgastemperaturen auf, da die Kondensation des im Abgas vorhandenen Wasserdampfes vermieden werden muss. Dies insbesondere, um Korrosion im Heizkessel zu verhindern. Dadurch sind dem Wirkungsgrad solcher Kessel Grenzen gestellt. Zur Erhöhung des Wirkungsgrades sind seit langem zwischen Abgasstutzen des Kessels und Kaminanschluss montierte Abgas-Wasser-Wärmetauscher im Einsatz, in welchen ein Teil der im Abgase enthaltene Wärme an das durchströmte Wasser übertragen wird und so genutzt werden kann, wodurch der Gesamtwirkungsgrad der Anlage gesteigert wird. Besonders gross ist der zusätzliche Nutzen, wenn auch die Kondensationswärme des Wasserdampfes im Abgas genutzt werden kann, was dann der Fall ist, wenn das durchströmte Wasser kälter ist als der Taupunkt des Dampfes.

Eingebunden sind solche Wärmetauscher entweder in einem separaten Niedertemperatur-Heizkreis oder in Serie mit dem Kessel, wobei der Wärmetauscher den Rücklauf des Kessels vorwärmt. Meist findet man solche Anordnungen in grösseren Anlagen, wo mehrere Heizkreise benötigt sind und wo Kessel installiert sind, welche mit einer Rücklaufhochhaltung versehen sind, die eine minimale Rücklauftemperatur sicherstellen muss. Der Wärmetauscher muss während des Brennbetriebs durchströmt sein, weil sonst infolge des geringen Wasservolumens die Gefahr von Dampfbildung besteht. Dies stellt hier keine besondere Anforderung dar, da im Fall der separaten Einbindung lediglich die vorhandene Zirkulationspumpe rechtzeitig angesteuert werden muss und im Fall der seriellen Einbindung die Rücklaufhochhaltung für eine stete Durchströmung des Kessels mit seinem Wärmetauscher sorgt.

Klimaschutzbestimmungen sowie gestiegene Brennstoffpreise haben unter anderem zu folgenden Tendenzen geführt:
- höhere Wirkungsgradanforderungen, vielfach sogar nach Brennwerttechnologie, somit Nachfrage nach oben beschriebenen Wärmetauscher auch für kleinere Leistungen, wo allerdings häufig kein zweiter Heizkreis vorgesehen werden kann.
- tiefere Betriebstemperaturen, vermehrter Einsatz von sogenannten Niedertemperaturkessel (NT-Kessel).

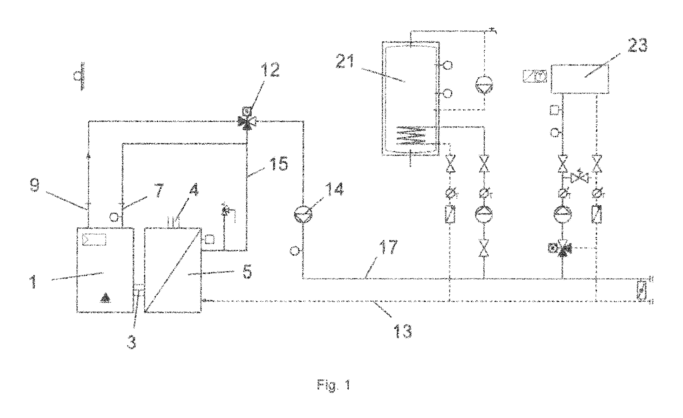

Die NT-Flammrohrkessel erfordern keine Rücklauftemperaturhochhaltung. Die Sicherstellung der notwendigen minimalen Kesseltemperatur zur Verhinderung von Kondensation im Kessel erfolgt mitunter durch Regelung der Wassermenge mittels Einflussnahme auf die Regelventile und/oder Pumpen der Verbraucherhydraulikkreise. Letzteres kann bedeuten, dass diese Kessel unter Umständen, wie zum Beispiel während des Kaltstarts, nicht durchströmt werden, was wiederum die serielle Einbindung eines Wärmetauschers nur mittels Zuhilfenahme eines zusätzlichen Regelventils und damit ebenfalls erforderlichen Zirkulationspumpe ermöglicht, wie beispielsweise unter Bezug auf nachfolgend beschriebene Figur 1 dargelegt.

Es ist deshalb eine Aufgabe der vorliegenden Erfindung eine Massnahme vorzuschlagen, um ungeachtet der Strömungsanforderungen des Kessels während des Brennbetriebs eine ausreichende Durchströmung des Abgaswärmetauschers sicher zu stellen, so dass die Gefahr der Dampfbildung verhindert werden kann.

Vorgeschlagen wird ein Wärmetauscher im Bereich der Abgasführung eines Heizkessels gemäss dem Wortlaut nach Anspruch 1.

Erfindungsgemäss wird vorgeschlagen, dass die Flüssigkeitsführung im Abgaswärmetauscher dergestalt mit der Heizflüssigkeit im Heizkessel kreislaufartig verbunden ist, das bei Erwärmung der Wärmetauscherflüssigkeit eine Naturzirkulation zwischen Wärmetauscher und Kessel einsetzt. Die erwärmte Flüssigkeit steigt im Wärmetauscher auf und wird via geeignetem Anschluss zum Heizkessel geführt. Durch eine zweite Verbindung, den sogenannten Bypass im unteren Bereich des Heizkessels, das heisst im kälteren Bereich des Heizkessels, fliesst kältere Flüssigkeit aus dem grossen Kesselvolumen zurück zum Wärmetauscher. Hiermit erübrigt sich eine Zwangsdurchströmung. Dies ermöglicht wiederum die serielle Einbindung des Abgaswärmetauschers auch bei einem Niedertemperatur-Flammrohrkessel mit Wassermengenregelung.

Auf eine Zirkulationspumpe sowie ein Regelventil kann verzichtet werden, da keine zusätzliche Regelung zur Sicherstellung der Wärmetauscherdurchströmung notwendig ist, wodurch die Einbindung des Wärmetauschers in das Heizsystem sehr vereinfacht wird. Zudem kann das erfindungsgemäss beschriebene, kombinierte Heizsystem mit beliebig kaltem Rücklauf betrieben werden, wodurch grundsätzlich Wirkungsgrade erzielt werden können, welche vergleichbar sind mit herkömmlichen Brennwertkesseln, jedoch verbunden mit dem kostengünstigen Konzept des Flammrohrkessels.

Die Ausgestaltung des Wärmetauschers im Bereich der Flüssigkeitsführung kann auf verschiedenste Art und Weise erfolgen. So können beispielsweise serpentinartige Flüssigkeits- wie insbesondere Wasserrohre verwendet werden, mit einem Rücklaufanschluss im unteren Bereich und dem Vorlaufanschluss im oberen Bereich, um schliesslich das im Abgaswärmetauscher erwärmte Wasser als Rücklauf in den Heizkessel zu führen. Die Rohre können auch schräg angeordnet sein. Alternativ kann auch das Abgas durch Rauchrohre innerhalb eines Wassermantels geführt sein.

Gemäss einer Ausführungsvariante wird vorgeschlagen, dass der Rücklauf der Heizflüssigkeit zum Heizkessel mindestens teilweise durch den Abgaswärmetauscher geführt wird und dass der untere Bereich des Heizkessels bypassartig mit der Rücklaufzufuhr zum Abgaswärmetauscher verbunden ist, derart, dass insbesondere ohne Zwangszirkulation eine Naturzirkulation zwischen Wärmetauscher und Heizkessel einsetzt. Eine zusätzliche direkte Anschlussmöglichkeit direkt zum Kessel kann als Hochtemperaturrücklauf genutzt werden, wobei der Rücklauf mit der hohen Temperatur am Abgaswärmetauscher vorbei geführt wird, wodurch gewährleistet ist, dass die Wärmetauscherflüssigkeit im Wärmetauscher eine möglichst tiefe Temperatur aufweist.

Weitere bevorzugte Ausführungsvarianten des Heizkessels mit dem Wärmetauscher sind in abhängigen Ansprüchen charakterisiert.

Entsprechend vorgeschlagen wird ebenfalls ein Verfahren zum Betreiben eines Heizkessels, wobei die Wärmetauscherflüssigkeit im Bereich der Abgasführung aus dem Heizkessel kreislaufartig mit der Heizflüssigkeit im Heizkessel verbunden ist. Beim Kaltstart fliesst durch den oben erwähnten Bypass kalte Heizflüssigkeit bzw. Heizwasser aus dem unteren Bereich des Heizkessel in den Rücklaufanschluss der Wärmetauscherflüssigkeit, wobei durch Erwärmen der Wärmetauscherflüssigkeit bzw. des Wärmetauscherwassers infolge Naturzirkulation eine kreislaufartige Durchströmung von Wärmetauscher und Heizkessel einsetzt.

Die Erfindung wird nun beispielsweise und unter Bezug auf die beigefügten Figuren näher erläutert.

Dabei zeigen:
Fig. 1 schematisch ein Niedertemperaturheizkesselsystem mittels herkömmlicher Einbindung von Zirkulationspumpe und Regelventil,
Fig. 2 die Auslegung eines Heizsystems wie vorgeschlagen gemäss der vorliegenden Erfindung ohne die Notwendigkeit von Zirkulationspumpe und Regelventil,
Fig. 3a bis 3c schematisch und im Schnitt die Ausgestaltung des Wärmetauschers im Bereich der Wasser- und Abgasführung, und
Fig. 4 in perspektivischer Ansicht die konstruktive Ausgestaltung eines erfindungsgemässen Heizsystems.

Fig. 1 zeigt ein herkömmliches Heizsystem bestehend aus Niedertemperaturkessel 1, Abgasleitung 3 sowie einen Wärmetauscher 5 in welchem die durch das Abgas abgeführte Wärme wenigstens teilweise zurückgewonnen wird bevor es den Wärmetauscher über Abgasstutzen 4 verlässt. Die Heizflüssigkeit gelangt über einen Rücklauf 7 in den Heizkessel und verlässt diesen erwärmt über eine Vorlaufleitung 9, welche über ein Regelventil 12 und Zirkulationspumpe 14 mit zu beheizenden Komponenten verbunden ist wie beispielsweise einem Boiler 21 sowie einer Hausheizung 23. Von diesen Komponenten führt eine Rücklaufleitung 13 zum Wärmetauscher 5, von welchem die erwärmte Wärmetauscherflüssigkeit über eine Vorlaufleitung 15 in den Rücklauf 7 zum Heizkessel 1 gelangt.

Beim Betrieb des Heizkessels 1 verlässt heisses Abgas denselben und gelangt in den Wärmetauscher 5, wo die Wärmetauscherflüssigkeit erhitzt wird. Da eine natürliche Zirkulation über das gesamte Heizsystem nicht einsetzt, besteht die Gefahr der Dampfbildung. Somit ist es nötig, dass eine Zirkulation erzwungen wird, was mittels Zirkulationspumpe 14 sichergestellt ist. Bei Niedertenperaturkesseln kann es, insbesondere während der Kaltstartphase, erforderlich sein, die Zirkulation über Kessel 1 von dessen Rücklauf 7 zum Vorlauf 9 unabhängig von der durch den Wärmetauscher 5 geführten Wassermenge zu regeln. Dazu ist das Regelventil 12 vorgesehen, über welches ein variabler Anteil des Vorlaufs 15 aus dem Wärmetauscher 5 am Kessel 1 vorbei direkt in das Heizsystem gelangen kann.

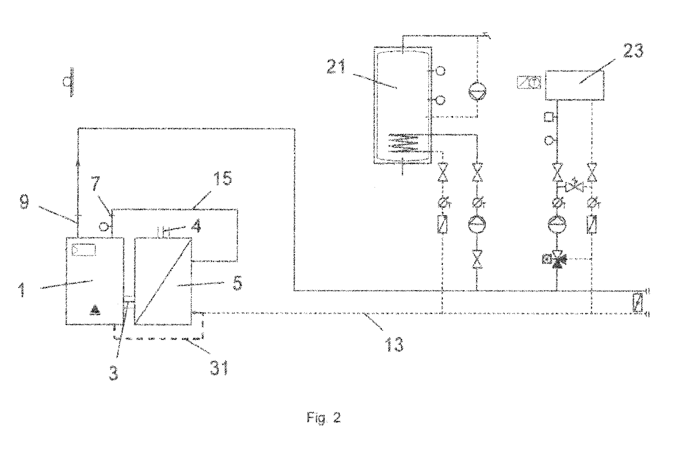

Figur 2 zeigt in einem analogen Schema das erfindungsgemäss ausgelegt Heizsystem. Wiederum verlässt Abgas den Heizkessel 1 durch die Abgasleitung 3 in den Wärmetauscher 5, wo die Abgaswärme zusätzlich genutzt wird um anschliessend den Wärmetauscher über Abgasstutzen 4 zu verlassen.

Durch das erfindungsgemässe Anordnen einer Bypassleitung 31 zwischen dem unteren "kalten" Bereich des Heizkessels 1 und dem Eingang bzw. Rücklauf der Wärmetauscherflüssigkeit zum Wärmetauscher 5 setzt beim Betrieb des Kessels 1 im Wärmetauscher 5 eine natürliche Zirkulation ein. Die Wärmetauscherflüssigkeit bzw. das Wasser wird im Wärmetauscher 5 erwärmt und gelangt über die Leitung 15 direkt zum Rücklaufanschluss 7 des Heizkessels 1, wobei infolge der Bypassleitung 31 automatisch kältere Flüssigkeit in den Eingang 13 des Wärmetauschers nachfliesst. Mit anderen Worten wird auch ohne Zwangszirkulation eine natürliche, kreislaufartige Strömung zwischen Heizkessel und Wärmetauscher erzeugt, welche die Gefahr der Dampfbildung im Wärmetauscher 5 unterbindet.

Die Regelung der Zirkulation über die Vorlaufleitung 9 in den Boiler 21 und das Heizsystem 23 erfolgt durch Ansteuerung der Pumpen und/oder Regelventile der Verbraucherkreise. Diese Zirkulation fliesst über den Rücklauf 13 auch in den Wärmetauscher 5 zurück. Mit anderen Worten verringert sich dadurch das Nachfliessen über die Bypassleitung 31 bis hin zum gänzlichen Ausbleiben eines Rückflusses, was insbesondere dann der Fall ist, wenn die Heizflüssigkeit auch im unteren Bereich des Heizkessels 1 wärmer ist als die Temperatur im Rücklauf 13.

Erfindungswesentlich ist nun, dass infolge der Bypassleitung 31 eine kreislaufartige Naturzirkulation zwischen Heizkessel 1 und Wärmetauscher 5 einsetzen kann, wodurch auch ohne erzwungene Zirkulation Dampfbildung im Wärmetauscher und somit die Gefahr der Beschädigung des Wärmetauschers verhindert wird.

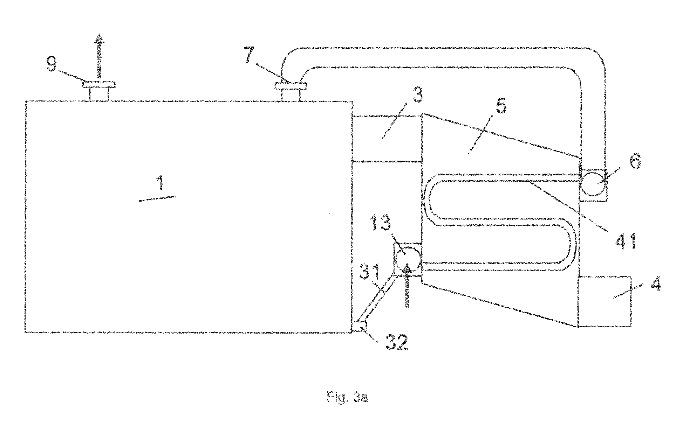

In den Fig. 3a bis 3b sind im Längsschnitt und schematisch drei mögliche Ausführungsvarianten des erfindungsgemässen Heizsystems, insbesondere der Anordnung der Wärmetauscherrohre im Bereich der Abgasführung dargestellt.

In Fig. 3a ist nachgeschaltet an einen Heizkessel 1 ein Wärmetauscher 5 vorgesehen, um das durch das Abgasrohr 3 geführte Abgas zur Wärmegewinnung abzukühlen. Im Wärmetauscher 5 sind serpentinenförmige Wärmetauscherrohre wie beispielsweise Wasserrohre 41 geführt mit einem Rücklaufanschluss 13 am Wärmetauscher unten und dem Vorlaufanschluss 6 am oberen Ende. Dass im Wärmetauscher 5 abgekühlte Abgas wird über einen Abgasstutzen 4 abgeführt.

Der Abführstutzen für das gegebenenfalls anfallende Kondensat ist nicht dargestellt, da für diese Betrachtung nicht erheblich. Der Vorlaufanschluss 6 am Wärmetauscher ist mit einem Rücklaufanschluss 7 des Kessels 1 verbunden. Um zu verhindern, dass die Wärmetauscherflüssigkeit im serpentinförmigen Wasserrohr 41 verdampft, ist es notwendig, dass die Wärmetauscherflüssigkeit bzw. das Wärmetauscherwasser in den Rohren 41 zirkuliert. Dies wird, wenn dem Wärmetauscher 5 vom Verbraucher über Rücklauf 13 keine Flüssigkeit zugeführt wird, sichergestellt durch die Bypassverbindung 31, welche zwischen einem Anschluss 32 unten am Heizkessel 1 und dem Rücklaufanschluss 13 des Wärmetauschers 5 ausgebildet ist. Durch Zuführung der heissen Abgase wird die Wärmetauscherflüssigkeit in den Rohren 41 relativ rasch erwärmt wird, wodurch eine Naturzirkulation zwischen dem Wärmetauscher 5 und der Heizflüssigkeit im Heizkessel 1 einsetzt. Dies ist zu Beginn einer Heizphase ausgeprägt, da im unteren Bereich des Kessels die über die Bypassverbindung 31 nachströmende Heizflüssigkeit kalt ist, währendem im oberen Teil der vom Wärmetauscher nachfliessende Rücklauf im Anschluss 7erwärmt ist.

So lange vom externen Kreislauf, das heisst beispielsweise von einem Boiler oder einem Heizsystem, keine Heizflüssigkeit in den Rücklaufanschluss 13 vom Wärmetauscher gelangt und andererseits auch kein Vorlauf den Heizkessel 1 über den Anschluss 9 verlässt, ist die Naturzirkulation zwischen Wärmetauscher und Heizkessel ausgeprägt. Sobald die Heizflüssigkeit im Heizkessel 1 sein nominales Temperaturniveau erreicht und Leistung an die Verbraucher abgegeben werden kann, setzt auch eine Zirkulation im externen Kreislauf ein, womit die zwischen Wärmetauscher und Heizkessel herrschende Naturzirkulation sukzessive reduziert wird und möglicherweise nach einer gewissen Zeit ganz entfällt. Dies ist aber nicht kritisch, da ja infolge der Zirkulation im externen Kreislauf im Wärmetauscher weiterhin sichergestellt ist, dass ausreichend Wärmetauscherflüssigkeit bzw. Wasser zirkuliert, so dass sich kein Verdampfen einstellen kann.

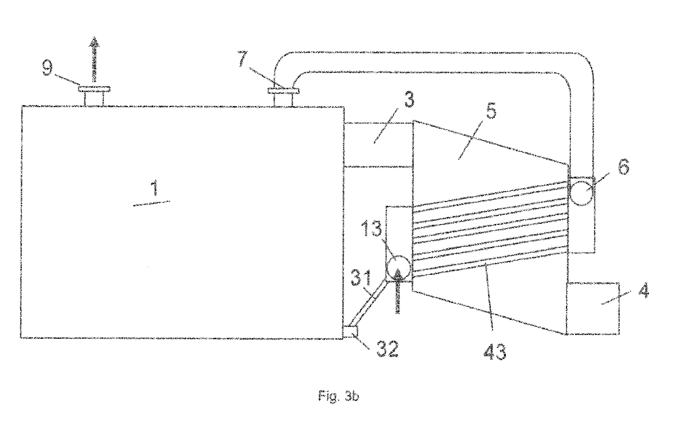

In Fig. 3b ist eine weitere Ausführungsvariante dargestellt, bei welcher im Wärmetauscher 5 schräg angeordnete gerade Wärmetauscherrohre 43 ausgebildet sind. Wiederum werden diese Wärmetauscherrohre über einen Rücklaufanschluss 13 unten zunächst mit Wasser aus der Bypassleitung 31 beschickt und später durch zurückfliessendes Kaltwasser aus dem externen Kreislauf. Am oberen Ende verlässt erwärmte Wärmetauscherflüssigkeit den Wärmetauscher 5 über den Vorlaufanschluss 6 um über den Rücklaufanschluss 7 in den Heizkessel 1 zu gelangen.

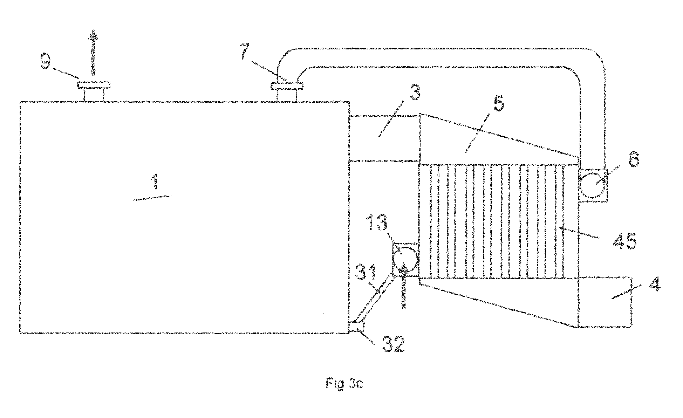

Fig. 3c zeigt einen Wärmetauscher 5, in welchem das Abgas durch Rohre 45, sogenannte Rauchzüge, von oben nach unten durch ein Wasservolumen geführt wird. Wiederum erfolgt die Beschickung des Wassermantels über einen Rücklaufanschluss 13 unten und die erwärmte Wärmetauscherflüssigkeit verlässt den Wärmetauscher 5 über den Vorlaufanschluss 6. Die übrigen in den Fig. 3b und 3c dargestellten Komponenten sind analog denjenigen, dargestellt in Fig. 3a. Auch die Funktionsweise ist dieselbe, wie unter Bezug auf Fig. 3a beschrieben.

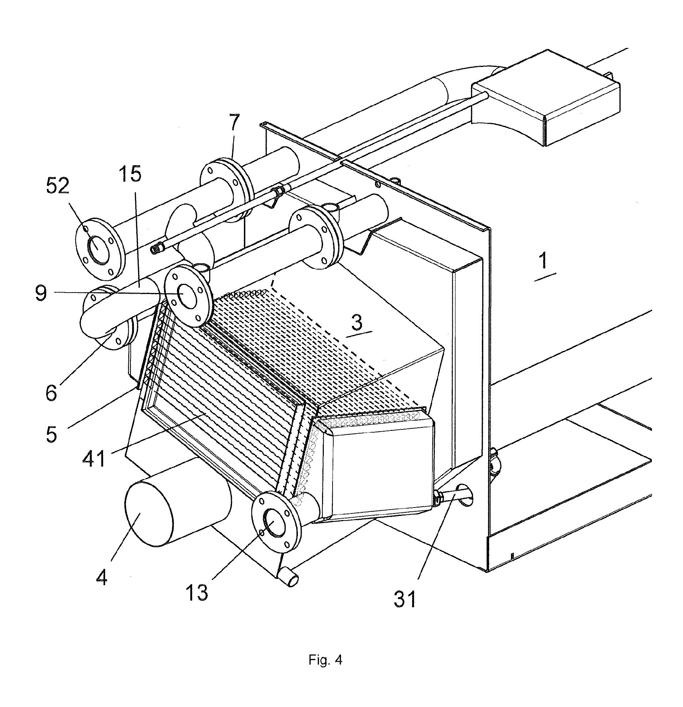

Fig. 4 schliesslich zeigt einen Heizkessel und Wärmetauscher, welche beispielsweise integral verbunden sind und so eine Einheit bilden. Der Heizkessel 1, bei welchem es sich um einen Niedertemperatur-Flammrohrkessel handeln kann, ist integral und nicht sichtbar über eine Abgasverbindung 3 mit dem Wärmetauscher 5 verbunden, bei welchem die einzelnen Wärmetauscherrohre 41 erkennbar sind. Über einen Abgasstutzen 4 verlässt das gekühlte Abgas den Wärmetauscher.

Der Wärmetauscher wird über einen Rücklaufanschluss 13 mit Wärmetauscherflüssigkeit beschickt, wobei dieser Anschluss 13 zusätzlich über den erfindungsgemäss wesentlichen Bypass 31 mit dem unteren Bereich des Heizkessels 1 verbunden ist. Die erwärmte Wärmetauscherflüssigkeit verlässt über den Vorlaufanschluss 6 den Wärmetauscher 5 und gelangt über eine Verbindungsleitung 15 zum Rücklaufanschluss 7 des Heizkessels 1. Zusätzlich vorgesehen ist ein Hochtemperaturrücklaufanschluss 52 durch welchen gegebenenfalls Rücklauf mit erhöhter Temperatur direkt zum Rücklaufanschluss 7 geführt wird.

Das in den Figuren 2 bis 4 dargestellte Heizsystem bzw. der erfindungsgemäss beschriebene Abgaswärmetauscher mit Heizkessel stellen selbstverständlich nur Beispiele dar, welche in x-beliebiger Art und Weise abgeändert, modifiziert oder durch weitere Elemente ergänzt werden können. So sind beispielsweise die in den Figuren 3a bis 3c dargestellten Rohrführungen im Wärmetauscher lediglich Beispiele und grundsätzlich kann der Wärmetauscher auf x-beliebige Art und Weise ausgebildet sein, sofern die Naturzirkulation nicht behindert wird. Dies ist letztlich eine Frage der Effizienz des Wärmetauschers, der Temperatur der Abgase, welche den Heizkessel verlassen, der Größe der Anlage, etc. etc.

Weiter ist es beispielsweise auch möglich, den beschriebenen Abgaswärmetauscher in die Abgasführung eines bestehenden Heizkessels zu integrieren. Mit anderen Worten ist es möglich einen erfindungsgemäss beschriebenen Abgaswärmetauscher in eine bestehende Heizanlage, das heisst mit einem herkömmlichen Heizkessel, zu kombinieren bzw. eine bestehende Heizanlage nachzurüsten. Die erfindungsgemäss wesentliche Bypassleitung 31 wird dann vorzugsweise an den Entleerungsstutzen des Heizkessels angeschlossen, womit sich Anpassungen am Kessel selbst erübrigen.

Weiter ist es beispielsweise auch möglich, den Rücklauf aus einem externen Heizsystem nur teilweise durch den Wärmetauscher zu führen und den anderen direkt dem Heizkessel zuzuführen. Insbesondere, wie unter Bezug auf Fig. 4 dargestellt, ist es auch möglich, einen Rücklauf mit erhöhter Temperatur am Wärmetauscher vorbeizuführen, wodurch gewährleistet wird, dass das Wasser im Wärmetauscher möglichst kalt ist und somit möglichst viel Abgas kondensiert wird, was wiederum den Wirkungsgrad maximiert.

Weiter ist es auch möglich, üblicherweise in den Rauchzügen eines Flammrohrkessels eingebrachte Turbulatoren, welche den Wärmetausch zwischen Abgas und Wasser erhöhen, jedoch die Abgastemperatur absenken, wegzulassen. Die damit entstehende höhere Abgastemperatur im Abgaskollektor wird im Wärmetauscher genutzt. Der Vorteil dieser Anordnung besteht darin, dass höhere Modulationsraten ermöglicht werden, da die Kleinlast solcher Schwarzstahlheizkessel durch die minimal zulässige Abgastemperatur im Kessel bestimmt wird, unterhalb welcher Korrosionsschäden durch Kondensation entstehen.

## Patentansprüche

1. Wärmetauscher im Bereich der Abgasführung eines Heizkessels, **dadurch gekennzeichnet, dass** die Flüssigkeitsführung im Abgaswärmetauscher (5) mit der Heizflüssigkeit im Kessel (1)kreislaufartig verbunden ist, derart, dass bei Erwärmung der Wärmetauscherflüssigkeit mit der Heizflüssigkeit im Kessel eine natürliche Flüssigkeitszirkulation entstehen kann.

2. Wärmetauscher nach Anspruch 1, **dadurch gekennzeichnet, dass** die Wärmetauscherrohre (41) serpentinförmig im Abgaswärmetauscher (5) geführt sind mit einem Rücklaufanschluss (13) unten und einem Vorlaufanschluss (6) oben, welcher verbunden ist mit dem Rücklaufanschluss (7) des Heizkessels (1).

3. Wärmetauscher nach Anspruch 1, **dadurch gekennzeichnet, dass** die Wärmetauscherrohre (43) im Abgaswärmetauscher schräg angeordnete gerade Rohre aufweist.

4. Wärmetauscher nach Anspruch 1, **dadurch gekennzeichnet, dass** der Wärmetauscher einen Wärmetauscherflüssigkeitsmantel aufweist, durch welchen das Abgas durch Rohre (45) von oben nach unten geführt wird.

5. Heizkessel mit Abgaswärmetauscher nach einem der Ansprüche 1 bis 4, **dadurch gekennzeichnet, dass** der Rücklauf der Heizflüssigkeit zum Heizkessel mindestens teilweise durch den Abgaswärmetauscher (5) geführt ist und dass der untere Bereich des Heizkessels (1) bypassartig mit der Rücklaufzufuhr (13) zum Abgaswärmetauscher verbunden ist.

6. Heizkessel mit Wärmetauscher nach Anspruch 5, **dadurch gekennzeichnet, dass** die Wärmetauscherflüssigkeit wie auch die Heizflüssigkeit Wasser ist.

7. Heizkessel mit Wärmetauscher nach einem der Ansprüche 5 oder 6, **dadurch gekennzeichnet, dass** der Heizkessel (1) ein Niedertemperatur-Flammrohrkessel ist, mit Anschlussmöglichkeit zum Rücklauf des Niedertemperaturkessels welcher zusätzlich als Hochtemperaturrücklauf genutzt werden kann, wobei der Rücklauf mit der hohen Temperatur am Abgaswärmetauscher (5) vorbei geführt wird, wodurch gewährleistet ist, dass die Wärmetauscherflüssigkeit am Eintritt des Wärmetauschers (5) eine möglichst tiefe Temperatur aufweist.

8. Heizkessel mit Wärmetauscher nach einem der Ansprüche 5 bis 7, **dadurch gekennzeichnet, dass** die Rauchzüge des Flammrohrkessels weitgehendst frei von Turbulatoren sind um sicherzustellen, dass die Modulationsrate, das heisst das Verhältnis von Grosslast zu Kleinlast, maximiert wird.

9. Heizkessel mit Wärmetauscher nach einem der Ansprüche 5 bis 8, **dadurch gekennzeichnet, dass** der Wärmetauscher mit dem Heizkessel konstruktiv derart verbunden ist, dass beide eine Einheit mit gemeinsamer Verkleidung bilden.

10. Heizkessel mit Wärmetauscher nach einem der Ansprüche 5 bis 9, **dadurch gekennzeichnet, dass** der Heizkessel ein Niedertemperaturflammrohrkessel ist, und der Wärmetauscher mit dem Heizkessel konstruktiv derart verbunden ist, dass beide eine Einheit mit gemeinsamer Verkleidung bilden, welche als Brennwerteinheit bezeichnet werden kann.

11. Verfahren zum Betreiben eines Heizkessels mit Wärmetauscher nach einem der Ansprüche 5 bis 10, **dadurch gekennzeichnet, dass** ohne oder bei geringer Zufuhr von Heizflüssigkeit zum Rücklauf (13) des Wärmetauschers (5), wie beispielsweise beim Kaltstart des Kessels (1), zwischen Heizkessel und einem Abgaswärmetauscher eine kreislaufartige Zirkulation wie insbesondere eine Naturzirkulation erzeugt wird, indem der untere Bereich des Heizkessels mit dem Rücklaufanschluss der Wärmetauscherflüssigkeit im Abgaswärmetauscher verbunden ist.

12. Verfahren nach Anspruch 11, **dadurch gekennzeichnet, dass** die Heizflüssigkeit im Heizkessel, die Wärmetauscherflüssigkeit im Abgaswärmetauscher sowie ein Heizkreislauf derart miteinander verbunden sind, dass bei Kaltstart der Heizanlage zunächst zwischen Heizkessel und Wärmetauscher eine kreislaufartige Zirkulation erzeugt wird und bei Beendigung der Aufheizphase des Heizkessels infolge Einsetzen der Zirkulation im Heizsystem mindestens teilweise der Rücklauf vom Heizsystem durch den Wärmetauscher zum Heizkessel zurückgeführt wird.

13. Wärmetauscher nach einem der Ansprüche 1 bis 4, **dadurch gekennzeichnet, dass** er als Nachrüsteinheit in einem Heizsystem bestehend aus Heizkessel und Wärmetauscher im Bereich der Abgasführung angeordnet ist.
